# FASCICULE DE BREVET EUROPEEN

(11) **EP 1 857 905 B1**
(45) Date de publication et mention de la délivrance du brevet: **27.06.2012**
(21) Numéro de dépôt: 06290803.3
(22) Date de dépôt: 16.05.2006
(51) Int. Cl.: G05D 16/06, G05D 7/01, H02K 7/18

(54) **Appareil régulateur et débitmètre de gaz à détente et à clapet d'obturation de la voie d'écoulement du gaz**
Reguliervorrichtung und Durchflussmesser für Gas mit Druckreduzierer und Ventilklappe zum Verschluss des Durchflusswegs des Gases
Gas expansion regulator and flow meter and check valve for gas vent

(43) Date de publication de la demande: 21.11.2007
(73) Titulaire: Mesura, 57600 Forbach (FR)
(72) Inventeur: Schladerer, Max, 57600 Oeting (FR)
(74) Mandataire: Berger, Helmut

(56) Documents cités:
- US-A- 4 491 149
- US-A- 4 606 652
- US-A- 5 199 404

## Description

L'invention concerne un appareil régulateur et débitmètre de gaz à détente et à clapet d'obturation, du type comprenant un dispositif clapet et un dispositif siège, mobile l'un par rapport à l'autre entre une position d'obturation d'une voie d'écoulement de gaz entre un orifice d'entrée et un orifice de sortie et une position d'ouverture de cette voie, sous l'effet de moyens de membrane soumis à l'action antagoniste d'une force et de la pression de sortie du gaz.

On connaît déjà des appareils régulateurs et régulateurs et débitmètres de ce type, réalisés à partir de régulateurs à simple et double étages de détente. Ces appareils présentent des inconvénients majeurs dont celui d'une résolution insuffisante pour des petits débits entre 0,5 et 5% du débit nominal.

L'invention a pour but de proposer un appareil débitmètre qui pallie ces inconvénients.

Pour atteindre ce but, un débitmètre selon l'invention est caractérisée en ce que le dispositif clapet comprend au moins un organe de clapet ayant une configuration assurant que l'échelle du rapport du déplacement du dispositif clapet par rapport au débit de gaz est sensiblement constante dans le domaine des faibles débits et plus grande que l'échelle de ce rapport dans le domaine des débits plus grands.

Selon une caractéristique de l'invention, l'appareil régulateur est caractérisé en ce que le clapet comprend un élément obturateur d'un siège de clapet, placé à une extrémité d'une partie de clapet cylindrique axialement déplaçable dans un orifice cylindrique d'un gicleur, en formant un espace annulaire entre cette partie cylindrique et le gicleur, entre une position de fermeture de la voie d'écoulement de gaz par application de l'élément obturateur sur le siège et une position d'ouverture totale de cette voie dans laquelle la partie cylindrique est sortie de l'orifice de gicleur.

Selon une autre caractéristique de l'invention, l'appareil régulateur est caractérisé en ce que la partie cylindrique se termine par une partie tronconique.

Selon encore une autre caractéristique de l'invention, l'appareil régulateur est caractérisé en ce que l'espace annulaire constitue un moyen de perte de charge introduite dans la voie d'écoulement du gaz dans le domaine des faibles débits provoquant une augmentation du déplacement du dispositif clapet qui est plus grand par rapport au débit dans le domaine des débits plus faibles que dans le domaine des débits plus importants.

Selon encore une autre caractéristique de l'invention, l'appareil régulateur est caractérisé en ce que le dispositif clapet comporte deux clapets précités montés en tandem chacun dans un gicleur précité.

Selon encore une autre caractéristique de l'invention, l'appareil régulateur est caractérisé en ce que le dispositif double clapet délimite dans la voie d'écoulement un espace intermédiaire entre les deux clapets dans lequel la pression intermédiaire varie fortement par rapport aux pressions amont et aval lors du déplacement du clapet.

Selon encore une autre caractéristique de l'invention, l'appareil régulateur est caractérisé en ce que la pression intermédiaire précitée est utilisée pour entraîner en rotation l'organe mobile d'un dispositif générateur de courant d'alimentation d'un dispositif électronique associé au régulateur.

Selon encore une autre caractéristique de l'invention, l'appareil régulateur est caractérisé en ce que le dispositif générateur de courant comprend une turbine montée dans la voie d'écoulement de gaz, en amont du dispositif clapet et adaptée pour produire des impulsions de gaz utilisables pour l'entraînement de l'organe générateur précité.

Selon encore une autre caractéristique de l'invention, l'appareil régulateur est caractérisé en ce que le nombre des impulsions de gaz précitées est proportionnel au débit et en ce que le comptage des impulsions donne une valeur du débit qui peut être corrélée soit à la valeur de la pression intermédiaire soit à la valeur du déplacement.

Selon encore une autre caractéristique de l'invention, l'appareil régulateur est caractérisé en ce que le dispositif double clapet constitue un moyen d'auto-étalonnage de surveillance des dérives des valeurs de mesure du débit par comparaison des valeurs de la pression intermédiaire, de la valeur du déplacement et du nombre des impulsions.

Selon encore une autre caractéristique de l'invention, l'appareil régulateur est caractérisé en ce qu'il comporte un plan de pose contenant toutes les prises de pression, de température et de mouvement utiles pour la mesure du débit de gaz et l'entraînement de l'organe de générateur de courant et sur lequel peut être monté un boîtier électronique ayant un plan de pose complémentaire.

Selon encore une autre caractéristique de l'invention, l'appareil régulateur est caractérisé en ce que le boîtier électronique comporte un compartiment de batterie rechargeable, un potentiomètre d'indicateur du déplacement du dispositif clapet, un dispositif d'engrenage de transmission de mouvement, associé au potentiomètre et un dispositif générateur de courant.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant plusieurs modes de réalisation de l'invention et dans lesquels :
- la figure 1 est une vue schématique d'un régulateur débitmètre et compteur de gaz à détente équipé d'un clapet d'obturation du passage du gaz selon l'invention ;
- la figure 2 est un schéma illustrant le déplacement S du clapet selon la figure 1 en fonction du débit du gaz DB ;
- la figure 3 est une vue schématique illustrant l'utilisation d'un double clapet à la place du clapet simple de la figure 1 ;
- la figure 4 est une vue en coupe axiale d'un dispositif à double clapet selon la figure 3 ;
- la figure 5 illustre plusieurs courbes caractéristiques du fonctionnement du dispositif de la figure 4 ;
- la figure 6 est une vue en coupe d'un débitmètre à détente simple et double clapet selon l'invention pourvu en outre d'un dispositif générateur d'énergie électrique et d'un boîtier électronique ;
- la figure 7 est une vue en coupe selon la ligne VII-VII de la figure 6 ;
- la figure 8 est une vue similaire à la figure 7, mais montre une version différente de réalisation du dispositif générateur d'énergie électrique ;
- la figure 9 est une vue à plus grande échelle de la partie IX de la figure 6 ;
- la figure 10 est une vue similaire à la figure 7, mais montre une autre version de réalisation du dispositif générateur ;
- la figure 11 est une vue schématique, à plus grande échelle, d'une deuxième version de réalisation de la partie du dispositif générateur, monté dans le module de boîtier électronique ;
- la figure 12 est une vue schématique d'une première version de réalisation de la partie du dispositif générateur selon la figure 10, qui est monté dans le module de boîtier électronique ;
- la figure 13 est une vue de la face de pose du module de boîtier électronique selon l'invention ;
- la figure 14 est une vue en coupe d'un régulateur selon l'invention, à double détente et à double clapet, sans turbine en amont de ce dernier ;
- la figure 15 est une vue similaire à la figure 14 d'un régulateur pourvu d'une turbine amont ;
- la figure 16 est une vue en coupe perpendiculaire à la ligne XVI-XVI de la figure 15 ;
- la figure 17 est une vue de la turbine amont du dispositif générateur selon l'invention, perpendiculaire à son axe.

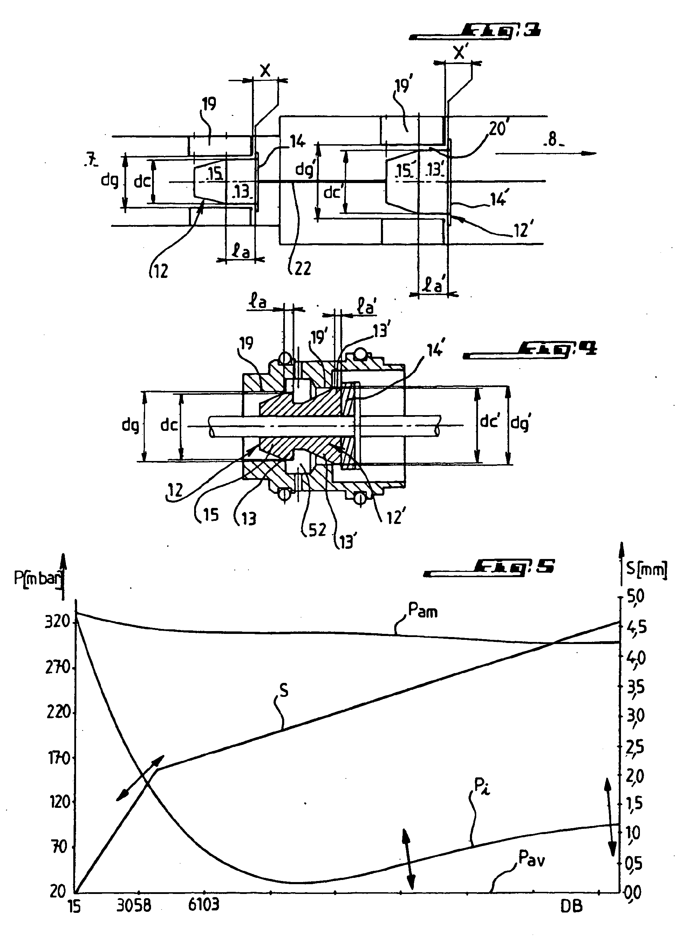

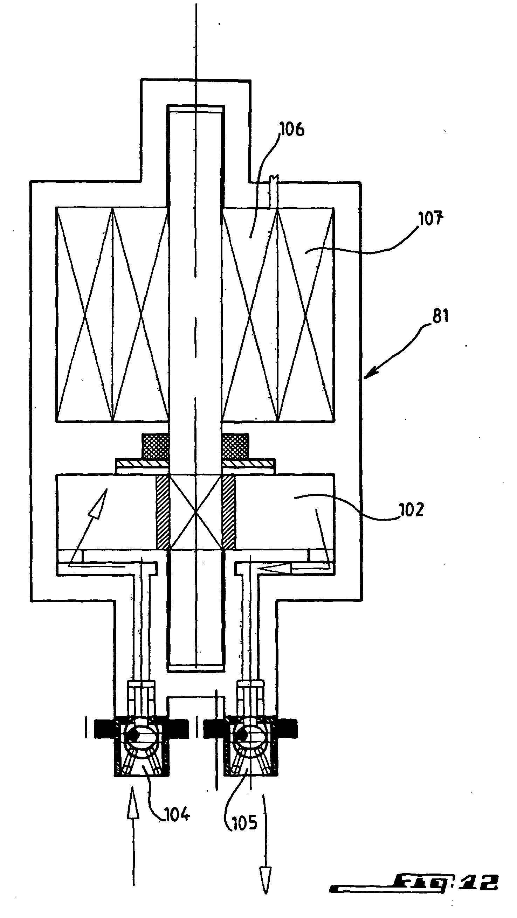

L'invention concerne un dispositif régulateur débitmètre et compteur du gaz à détente simple et double détente, tel que représenté sur les figures 4 et 12 et dont la structure générale est connue.

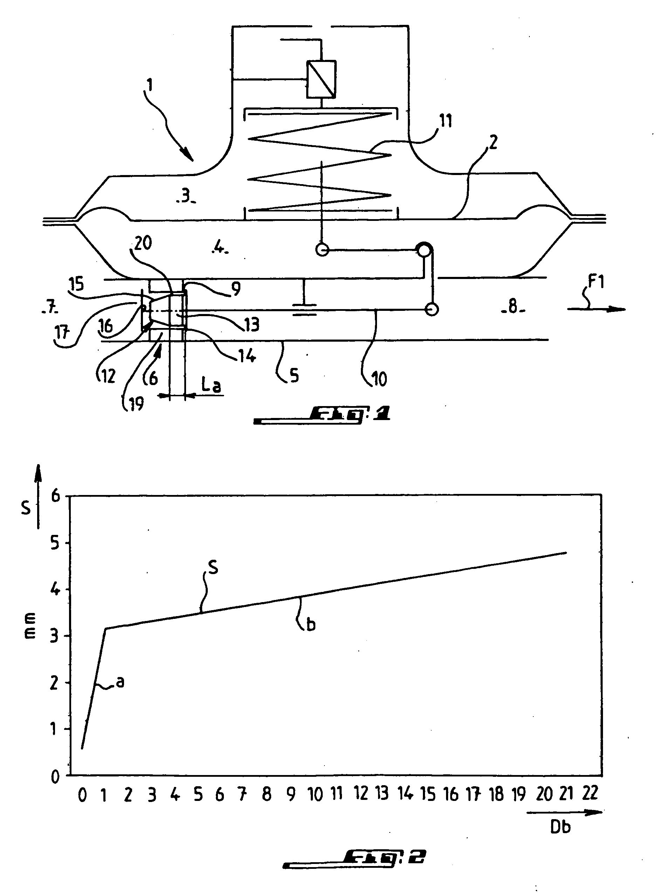

En se référant aux figures 1 à 4, on décrira ci-après tout d'abord une première caractéristique essentielle de l'invention, qui réside dans le dispositif clapet d'obturation du passage du gaz des régulateurs selon l'invention. Sur la figure 1, qui est un schéma de principe, la référence 1 désigne de façon générale le corps du détendeur, qui est subdivisé par une membrane 2 en une chapelle 3 et en une chambre 4 de détente. Cette chambre comporte un conduit de gaz 5 dans lequel est monté un dispositif obturateur 6 disposé entre une entrée de gaz 7 et une sortie de gaz 8. Le dispositif obturateur 6 en forme d'un clapet d'obturateur est déplaçable entre une position d'obturation d'un siège 9 et une position de dégagement de ce dernier, sous l'effet d'une tringlerie 10 reliée à la membrane 2, de façon que le déplacement de la membrane entraîne le déplacement du clapet 6. La chapelle 3 loge un ressort 11 qui est interposé entre le corps 1 et la membrane 2.

Selon un premier mode de réalisation, illustré à la figure 1, le dispositif clapet 6 est formé par un corps de clapet unique 12 comportant une partie cylindrique 13 d'une longueur prédéterminée et, de part et d'autre de cette partie 13, respectivement un élargissement annulaire d'obturation 14 et une partie tronconique 15 dont le diamètre diminue en direction de l'extrémité. A une certaine distance axiale de cette extrémité et reliée à celle-ci par un élément en forme d'une tige 16 est prévu un organe en forme d'un disque obturateur de sécurité 17. Ce clapet 12 est axialement déplaçable dans un orifice cylindrique de gicleur 19 d'un diamètre supérieur à celle de la partie cylindrique 13 du clapet de façon à laisser subsister entre cette partie 13 et l'orifice de gicleur 19 un espace annulaire 20. Dans l'exemple représenté le gicleur en forme d'une restriction annulaire cylindrique du conduit d'entrée est montée fixe et le clapet est mobile, mais il est également envisageable que le gicleur soit mobile et le clapet fixe, le déplacement relatif entre les deux organes étant produit par la tringlerie 10, de façon correspondant à la figure 1.

Grâce à la configuration, qui vient d'être décrite, du clapet 12 et du gicleur 19, le régulateur selon l'invention permet d'obtenir la courbe caractéristique du déplacement S du clapet en fonction du débit de gaz Db, telle qu'illustrée par la figure 2. La particularité de cette courbe caractéristique réside dans le fait qu'elle présente une pente beaucoup plus raide a dans le domaine des faibles débits que dans le domaine b des débits plus élevés. Cet effet amplificateur des déplacements du clapet, appelé effet loupe, pour les petits débits en régime subsonique est dû à la partie cylindrique 13 du clapet 12 qui, en coopération avec l'orifice cylindrique du gicleur oblige le gaz de s'écouler à travers l'espace annulaire 20 dont la section transversale est constante tant que la partie de clapet cylindrique 13 est engagée dans l'orifice de gicleur cylindrique. L'espace annulaire 20 occasionne une perte de charge entre le gicleur et le clapet, qui est importante et provoque la pente raide de la partie de courbe a dans le domaine des faibles débits dans lequel l'effet loupe est produit. La pente est occasionnée par la section transversale de l'espace annulaire tandis que les extensions de ce domaine de débit est dû à la longueur axiale La de cette partie de clapet cylindrique 13. Comme le montre la figure 2, dans ces circonstances, le déplacement S augmente rapidement et sensiblement linéairement en fonction du débit de gaz Db dans la mesure où la portion cylindrique restant engagée dans l'orifice du gicleur diminue lors du déplacement du clapet dans la direction de la flèche F1, jusqu'au moment où la partie cylindrique 13 est entièrement sortie de l'orifice. A partir de cet instant, c'est essentiellement l'ouverture X, c'est-à-dire l'écartement du rebord d'obturation 14 du siège du gicleur, qui détermine la perte de charge, la conicité de la partie 15 de clapet n'ayant pour fonction essentiellement d'éviter de phénomène de turbulence dans l'écoulement du gaz.

Il ressort de ce qui précède, que la partie de clapet annulaire 13 introduit une perte de charge supplémentaire lors de l'ouverture du clapet. Il est évident que les caractéristiques de l'effet de loupe sont variables en choisissant de façon appropriée la configuration du clapet, à savoir le diamètre de la partie cylindrique par rapport au diamètre de l'orifice du gicleur et la longueur axiale de cette partie cylindrique.

La figure 3 illustre un deuxième mode de réalisation du dispositif de clapet 6 selon l'invention. Dans ce mode de réalisation, ce dispositif comporte deux corps de clapet, chacun présentant la configuration générale du clapet 12 selon la figure 1 et coopérant avec un gicleur ayant la configuration du gicleur 19 de cette même figure 1. Ces deux organes de clapet sont désignés par les références 12, 12' et les gicleurs par les références 19 et 19'. Les deux organes de clapet 12, 12' ainsi que leurs gicleurs sont espacés axialement dans le conduit d'écoulement du régulateur entre l'entrée 7 et la sortie 8. Les clapets 12, 12' sont reliés par un élément porte-clapet en forme d'une tige 22 interconnectant l'extrémité de la partie tronconique 15 du clapet 12' à l'extrémité d'obturation 14 du clapet 12.

Le dispositif a deux clapets montés en tandem, dont chacun présente la configuration générale du clapet unique de la figure 1, en plus de produire l'effet de loupe dans le domaine des faibles débits ressortant de la courbe caractéristique de la figure 2, procure d'autres avantages qui sont expliqués ci-après en se reportant à la figure 5, grâce à un dimensionnement approprié des deux clapets. Ce dimensionnement découle déjà de la représentation schématique de la figure 3, mais apparaît plus précisément à la figure 4 qui illustre la configuration du double clapet tel qu'il est, utilisée dans les régulateurs qui seront décrits ci-après. Les courbes de la figure 5 ont été établies en utilisant le dispositif de clapet selon la figure 4.

On constate notamment que le diamètre d_{c} de la partie cylindrique 13 du clapet 12 qui est le clapet amont est inférieur au diamètre d_{c'} de la partie cylindrique 13' du clapet 12' constituant le clapet aval. Le diamètre d_{g} du gicleur 19 du clapet amont est inférieur au diamètre d_{g'} du gicleur 19' du clapet aval. Concernant les longueurs des parties cylindriques des deux clapets, la longueur axiale lₐ de la partie cylindrique 13 du clapet amont 12 est inférieure à la longueur l_{a'} de la partie cylindrique 13' du clapet aval 12'.

La figure 5, par les trois courbes Pₐₘ, Pᵢ, Pₐᵥ illustre le fonctionnement spécifique du régulateur selon l'invention, grâce au dispositif double clapet selon les figures 3 et 4. Les courbes Pₐₘ, Pᵢ et Pₐᵥ montrent respectivement la pression en amont du clapet amont 12, la pression entre les deux clapets amont 12 et aval 12' et la pression en aval du clapet aval 12', la pression P étant indiquée sur l'axe d'ordonnées en mbar à gauche tandis que le déplacement axial du dispositif clapet est indiqué en mm sur l'axe d'ordonnées à droite. Les chiffres ne sont donnés qu'à titre d'exemple pour indiquer ce qu'il faut entendre par "domaine des faibles débits".

La figure 5 montre que la pression aval Pₐᵥ est constante et que la pression amont Pₐₘ ne varie que faiblement, contrairement à la pression intermédiaire Pᵢ dont la variation est importante. Il en est de même pour le déplacement S en fonction du débit. Ces modifications sont dues aux pertes de charge occasionnées par les restrictions des clapets amont et aval du dispositif obturateur. Concernant le déplacement S de ce dispositif, la courbe S correspond à la courbe de la figure 2 et reflète l'effet de loupe dans le domaine des faibles débits. On constate une première zone de déplacement déterminée par les restrictions des clapets amont et aval, tandis que la zone des déplacements plus importants est déterminée par la perte de charge de la restriction du clapet amont. Quant à la pression intermédiaire Pᵢ, elle diminue tout d'abord fortement dans la zone des débits les plus faibles, sous l'effet des restrictions des clapets amont et aval, atteint une valeur minimum pour monter ensuite progressivement sous l'effet essentiellement de la variation de la perte de charge produite par la restriction du clapet aval. La descente rapide initiale de la courbe Pᵢ est variable en fonction des restrictions des deux clapets, c'est-à-dire des jeux ou espaces annulaires 20, 20', la valeur minimum par le choix des longueurs axiales des parties cylindriques 13, 13' et la pente finale essentiellement par la variation de l'espace annulaire constituant la restriction aval du clapet aval, comme cela est schématiquement indiqué par les flèches.

En se reportant aux figures suivantes 6 à 17, on décrira ci-après des caractéristiques avantageuses de l'invention obtenues grâce au dispositif obturateur 6, notamment le dispositif à double clapet tel que représenté sur les figures 3 et 4.

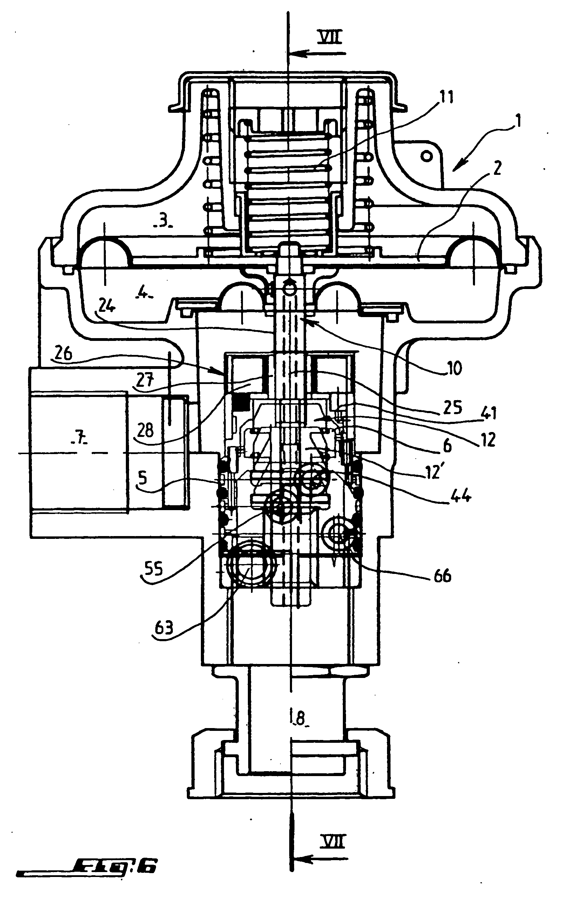

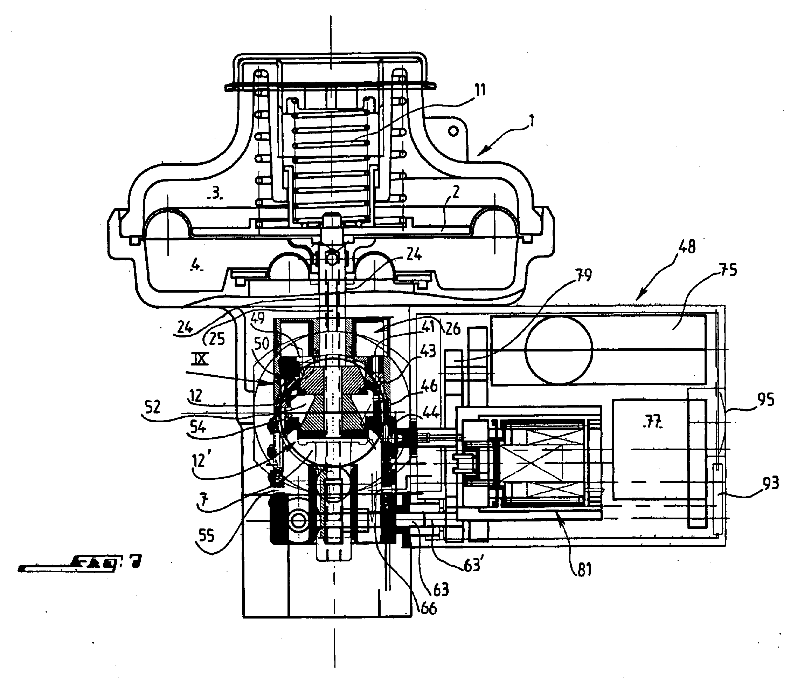

Les figures 6 et 7 montrent un régulateur à détente simple, équipé d'un dispositif à double clapet 6 selon la figure 4 et en plus d'un dispositif générateur d'énergie électrique et d'un boîtier électronique, tous les deux constituant d'autres caractéristiques avantageuses selon l'invention. Le régulateur ou détendeur présente une structure générale connue en soi, pourvue, comme cela est déjà montré sur la figure schématique 1, d'un corps de détendeur 1 subdivisé par une membrane 2 en une chapelle 3 et une chambre de détente 4. La membrane est reliée au dispositif 6 aux deux clapets 12, 12' montés en tandem, au moyen d'une tringlerie 10 de la manière montrée schématiquement sur la figure 1. Le conduit de sortie 8 communique avec la chambre de détente 4 par une tubulure 25 qui traverse axialement le dispositif à double clapet 6, à l'intérieur de la tige de clapet 24.

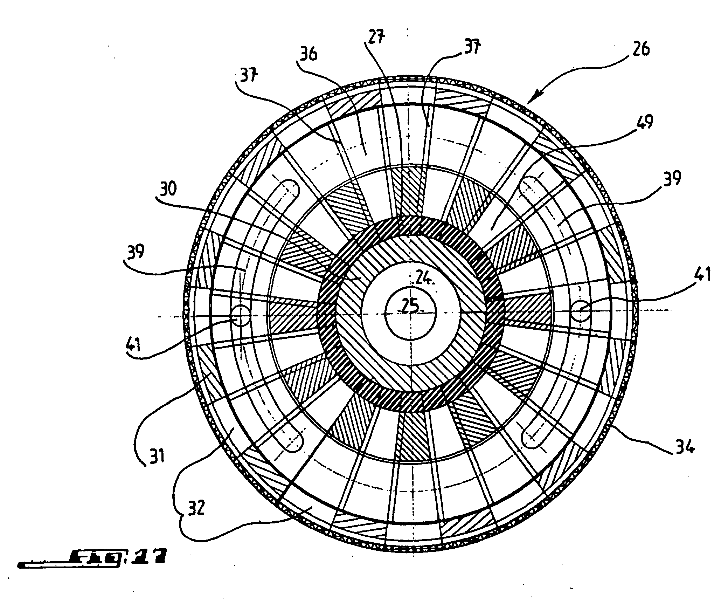

Le dispositif générateur d'énergie électrique invoqué plus haut comprend une turbine 26 dont le stator et le rotor sont indiqués respectivement en 27 et 28. En se reportant à la figure 17 qui montre la turbine 26 plus en détail et à plus grande échelle, on constate que le stator comporte une partie de stator interne 30 solidaire de la tige de clapet 24 qui relie les deux clapets amont et aval 12, 12' et une partie de stator tubulaire externe 31 pourvue de perçages 32 régulièrement répartis autour de sa circonférence. Ces perçages 32 permettent aux gaz arrivant par le conduit d'entrée 7 de s'écouler dans le rotor 27, après avoir traversé un filtre micronique 34 qui entoure coaxialement le stator externe tubulaire 31.

Le rotor 27 comporte un organe tiroir 36 pourvu d'ailettes 37. En s'engageant dans les compartiments délimités par des ailettes, et en agissant sur les ailettes orientées en conséquence, le gaz provoque la rotation du rotor.

Le tiroir 36 comprend, dans l'exemple représenté, deux ou plusieurs ouvertures de tiroir 39, chacune en forme d'un arc de cercle qui, lors de la rotation du rotor passe devant deux trous 41 de prise de pression de gaz provenant de la conduite d'entrée 7, qui sont diamétralement opposés. Ces trous 41 sont disposés de façon à être périodiquement fermés ou ouverts par les ouvertures en forme d'un arc de cercle 39. Les trous 41 sont pratiqués dans une paroi de fond du stator.

Comme le montre notamment la figure 7, une des ouvertures 41 communique avec un canal interne 43 s'étendant sensiblement axialement dans la paroi tubulaire du conduit de gaz dans lequel est monté le dispositif obturateur 6 à double clapet 12, 12' et s'ouvre vers l'extérieur par un canal radial qui débouche dans une face extérieure spécifique 46 constituant la face de pose d'un boîtier électronique portant la référence générale 48.

D'autre part, le gaz, après avoir traversé la turbine en l'entraînant en rotation, s'écoule à travers une ouverture 49 dans la paroi de fond dans l'espace 50 délimité dans le conduit de gaz en amont du clapet amont 12.

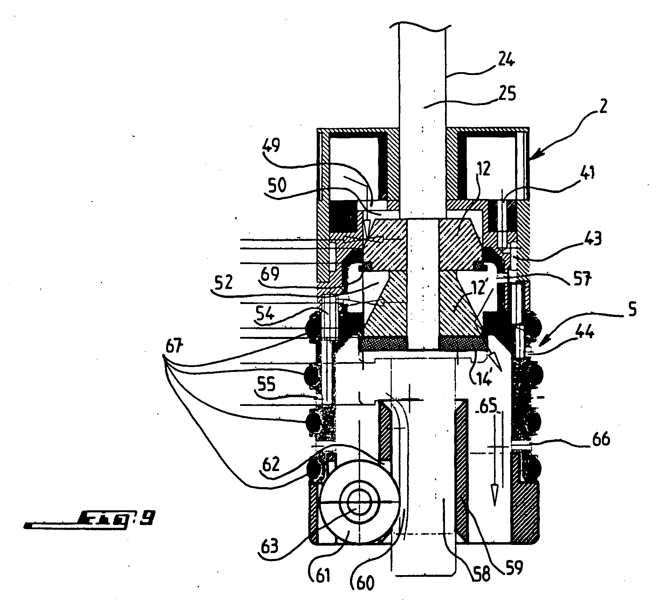

Comme on le voit sur la figure 9, l'espace intermédiaire 52, délimité entre les deux clapets 12, 12' dans le conduit de gaz 5 communique par un canal 54 interne à la paroi du conduit et une ouverture 55 avec l'extérieur, cette ouverture constituant une prise de la pression intermédiaire, c'est-à-dire régnant dans l'espace intermédiaire 52.

Cet espace intermédiaire est encore relié par un canal radial 57 de prise de pression intermédiaire calibré avec le canal 43 qui établit la communication entre le trou 41 périodiquement ouvert et fermé lors de la rotation du rotor de turbine et l'ouverture 44 qui constitue ainsi une prise des impulsions de pression produites par l'ouverture et fermeture cycliques du trou 41. Il est à noter que le trou 41 sert aussi de prise de la pression en amont du clapet amont 12.

La figure 9 montre encore, de façon détaillée, que le dispositif 6 à double clapet est pourvu d'un élément porte-clapet en forme d'une tige 58 qui s'étend coaxialement à partir du joint de clapet aval 14' dans le canal de sortie 5 en étant engagé dans un guide clapet 59. Cette tige porte-clapet 58 qui se déplace axialement avec le dispositif à double clapet comporte, au niveau de sa partie engagée dans un guide de clapet 59 une crémaillère 60, laquelle engrène un pignon 61 à travers une fenêtre 62 pratiquée dans un guide clapet. Le pignon 61 est monté solidaire en rotation sur un axe 63 qui transmet donc le mouvement axial du dispositif double clapet 6 à l'extérieur du bâti du régulateur où ce mouvement rectiligne S illustrée sur les courbes des figures 2 et 5 peut être pris sous forme d'un mouvement rotatif.

La figure 9 montre en outre que l'espace 65 situé en aval du clapet aval 12', en communication directe avec la sortie 8 du régulateur, communique par un canal radial 66 avec l'extérieur, son ouverture vers l'extérieur constituant l'orifice de la prise de pression aval.

Pour compléter la description de la figure 9, les références 67 et 69 représentent respectivement un joint d'étanchéité pour le montage du conduit de gaz dans le bâti du régulateur et un joint de clapet de sécurité à l'extrémité de la partie cylindrique 13 du clapet amont 12.

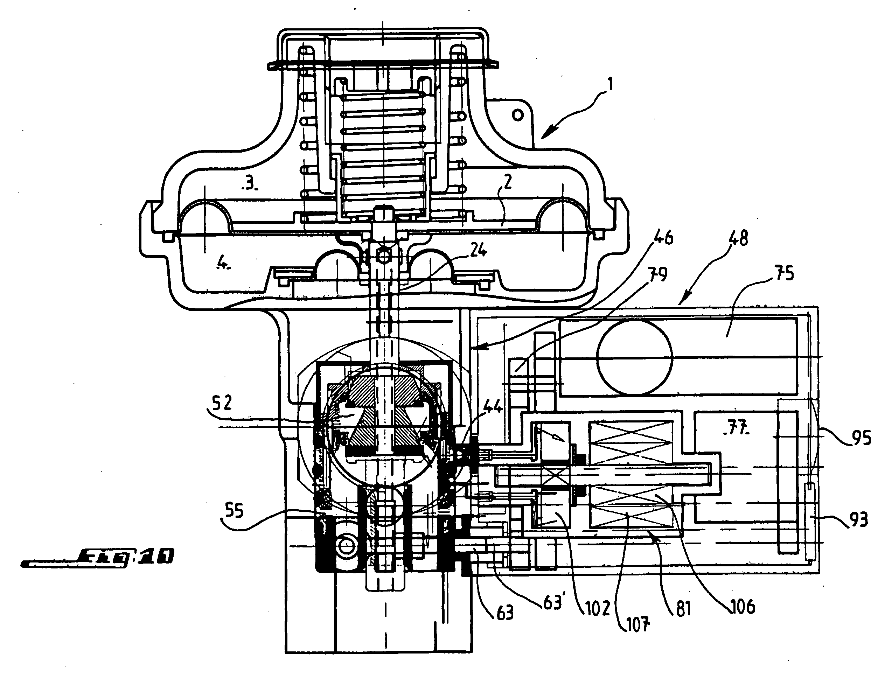

La figure 6 ou 10 montre les différentes prises qui sont rendues accessibles et disponibles dans un même plan, à savoir le plan de pose 46. Ainsi, on voit placée dans ce plan, la prise de pression aval 66 servant aussi de prise de température aval, la prise de pression intermédiaire 55 servant aussi de prise de température intermédiaire, en 44 la prise simultanément de la pression et température amont et des impulsions de pression, ainsi qu'en 63 l'axe représentatif du déplacement axial du dispositif à double clapet.

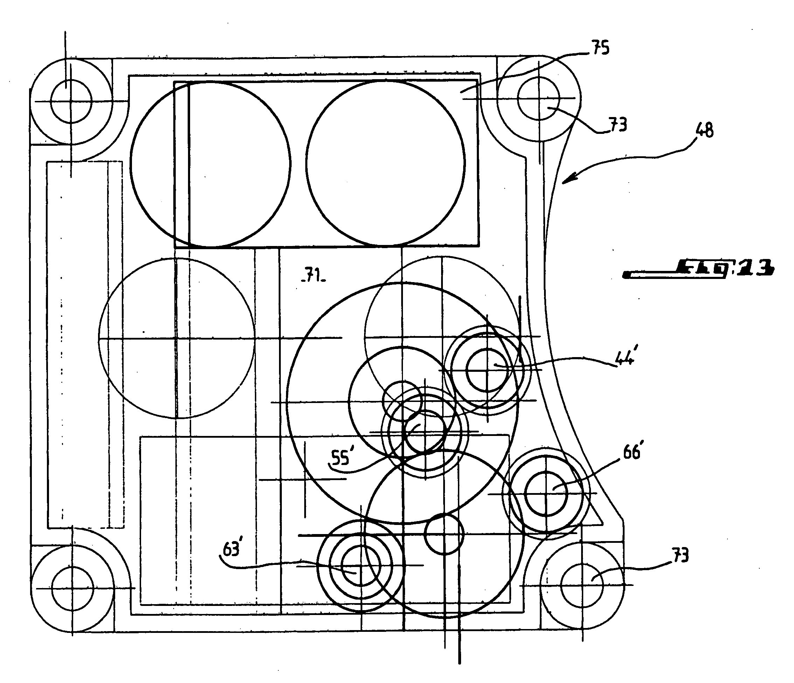

Comme on le voit sur la figure 7, le plan de pose 46 est destiné à recevoir le boîtier électronique 48 dont la face de pose est représentée sur la figure 13. La face de pose est désignée par la référence 71. Les références 44', 55', 66' et 63' désignent respectivement les prises de pression et température amont et d'impulsion de pression, la prise de pression et de température intermédiaire, la prise de pression et de température aval et la prise de l'arbre rotatif 63, du boîtier 48, qui coopèrent avec les prises portant les mêmes numéros que le plan de pose 46 du bâti du détenteur.

Le boîtier 48 est susceptible d'être fixé par des vis sur le plan de pose, prévues aux quatre angles du boîtier et dont les trous de passage sont représentés en 73.

Il ressort des figures que le boîtier électronique représenté par des vues amont et de côté s'intègre dans l'encombrement du régulateur et peut être déconnecté sans fuite de gaz dans la mesure où les connexions au niveau des différentes prises de gaz sont équipées de clapets anti-retour. Comme on le voit sur la figure 7, le boîtier contient des accumulateurs d'énergie et des batteries rechargeables qui sont placés dans un compartiment d'accumulateur indiqué schématiquement en 75, un potentiomètre 77 servant de capteur de déplacement de l'obturateur à double clapet, par l'intermédiaire d'un engrenage 79 de transmission de l'axe 63' qui est connecté au déplacement axial du dispositif à double clapet à l'axe 63 qui capte le mouvement axial S du dispositif à double clapet, ainsi qu'un dispositif générateur de courant désigné par la référence générale 81 qui sera décrit plus en détail plus loin. Le boîtier 48 comporte en outre sur sa face extérieure libre un afficheur du type LCD 93 et des boutons de commande indiqués en 95.

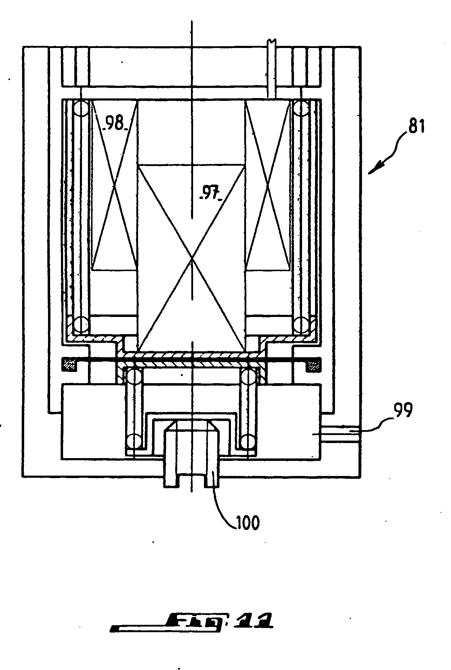

En se reportant à la figure 11, on constate que le dispositif générateur de courant 81 comporte essentiellement un aimant noyau 97 axialement mobile dans un bobinage 98 sous l'effet des impulsions de pression en provenance de la prise 44' et produites par la turbine 26. L'ouverture de réception des impulsions de pression est indiquée en 99. La référence 100 indique une vis d'équilibrage.

La figure 12 illustre un autre mode de réalisation du dispositif générateur de courant 81. Ce dispositif comprend une turbine 102 entraînée en rotation par l'écoulement de gaz produit par la différence de pression en amont du dispositif à double clapet et la pression intermédiaire. A cette fin, le dispositif comporte une entrée 104 reliée à la prise de pression amont et une connexion 105 à la prise de pression intermédiaire équipée de clapets anti-retour agissant lors de la déconnexion du boîtier électrique. La turbine est destinée à entraîner en rotation un rotor 106 tournant à l'intérieur d'un bobinage de stator 107. Le courant induit dans le bobinage 107 est utilisé pour charger la batterie du boîtier électronique.

Le dispositif générateur à turbine tel que représenté à la figure 12 permet de supprimer la turbine 26 montée dans la voie d'écoulement du gaz à l'amont du dispositif à double clapet.

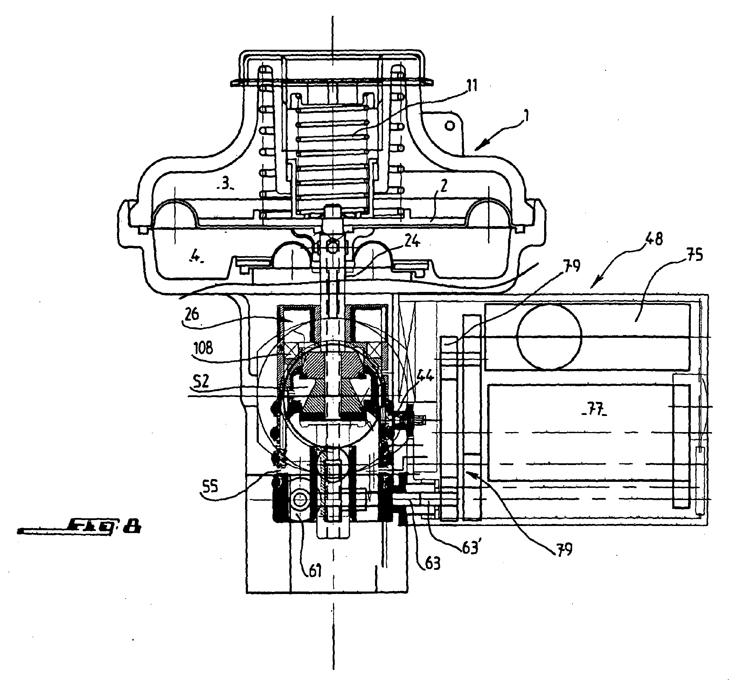

La figure 8 illustre un mode de réalisation du dispositif générateur de courant qui exploite directement la rotation de la turbine 26 pour la génération d'un courant de chargement de l'accumulateur du boîtier électronique. A cette fin, le rotor de la turbine est pourvu d'aimants 108 qui tournent devant un bobinage approprié fixe non représenté. Pour être compatible avec le boîtier électronique 48, le régulateur équipé de ce générateur de courant comporte le plan de pose déjà décrit avec les prises disposées de la même manière.

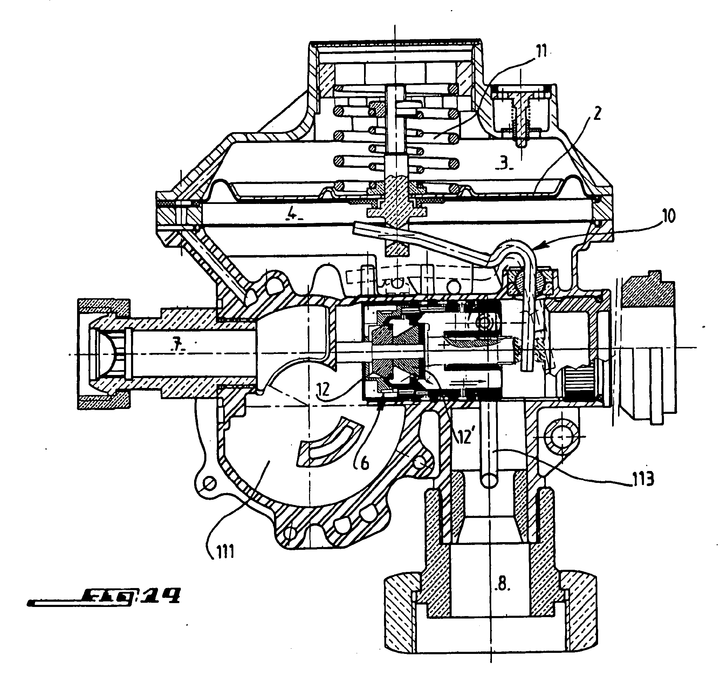

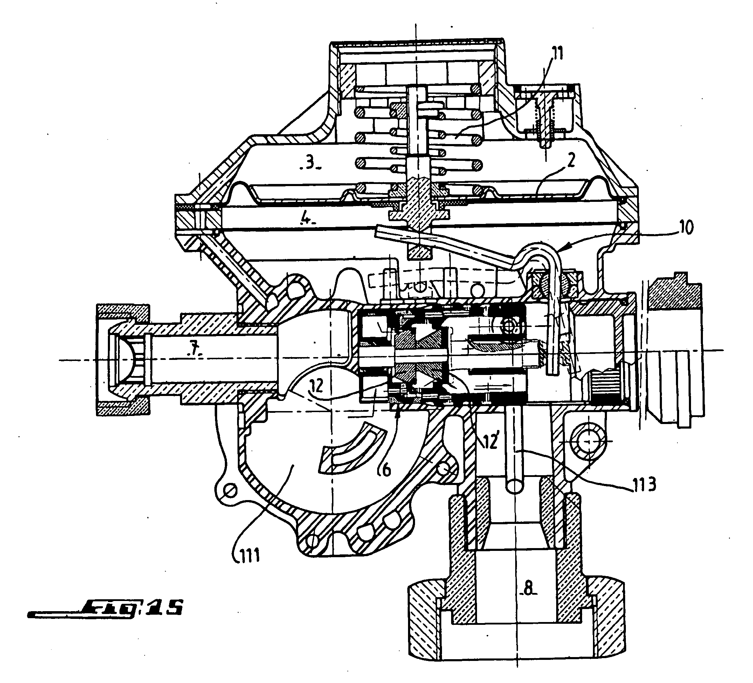

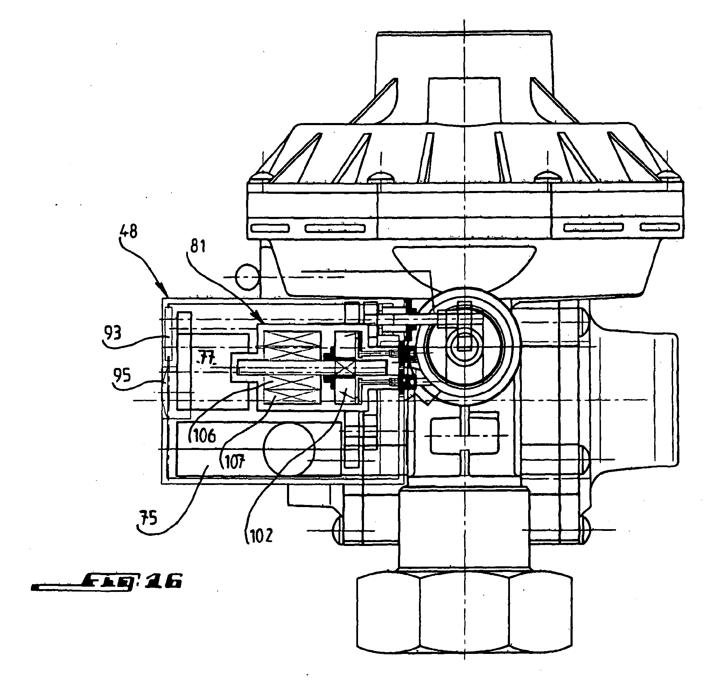

Les figures 14 à 16 montrent que l'ensemble qui vient d'être décrit ci-avant dans son application à un régulateur à détente simple, c'est-à-dire comprenant un dispositif obturateur 6 pourvu d'un clapet amont 12 et d'un clapet aval 12', une turbine 26 disposée en amont de cet obturateur dans le conduit d'écoulement de gaz 5 et le boîtier électronique 48 peut également être monté dans un régulateur à double détente de structure générale classique comportant un étage de prédétente 111 et une tubulure de liaison de pression aval 113.

Il ressort de la description qui précède de l'invention que celle-ci procure des spécificités et avantages considérables. En effet, grâce à la configuration à deux clapets 12, 12', montés en tandem, on obtient un effet amplificateur des déplacements du dispositif obturateur 6, pour des petits débits, ce qui permet une mesure précise et fiable, même dans ce domaine des faibles débits, ce qui était impossible jusqu'à présent et considéré même comme étant incompatible avec un régulateur. La plage des débits où l'effet loupe recherché est fonction de la longueur axiale des parties concentriques et cylindriques des clapets et gicleurs et est ainsi variable.

D'autre part, la configuration à deux clapets, avec création d'un espace intermédiaire entre ces deux clapets permet d'obtenir un critère, à savoir la pression intermédiaire Pᵢ, qui varie fortement en fonction du débit de gaz et peut être utilisée pour assurer un étalonnage des débits établis de façon connue en soi à partir des pressions de gaz amont et aval et du déplacement axial du dispositif obturateur, grâce à des capteurs de pression et du déplacement. La mesure de la pression intermédiaire pourrait même permettre de remplacer la mesure du déplacement, relativement complexe, par la simple mesure de seulement trois pressions. La forte variation de la pression intermédiaire Pᵢ, par rapport aux pressions amont Pₐₘ et aval Pₐᵥ qui sont sensiblement constantes, ressort clairement de la figure 5. De plus, cette variation peut être modifiée par un dimensionnement approprié des clapets amont 12 et aval 12', de la manière décrite plus haut et symbolisée par des flèches.

Un autre avantage majeur de l'invention réside dans l'utilisation de l'écoulement du gaz et de la forte différence entre la pression amont Pₐₘ et la pression intermédiaire Pᵢ pour l'entraînement d'un dispositif générateur de courant électrique, ce qui permet de conférer au détendeur une large autonomie en énergie. En disposant une turbine, c'est-à-dire la turbine 26 dans le conduit de gaz, en amont du dispositif obturateur à double clapet, ayant la structure décrite plus haut, on produit des impulsions pneumatiques variant entre la pression amont et la pression intermédiaire. Ces impulsions seront utilisées pour entraîner un générateur de courant disposé dans le boîtier électronique. Le comptage des impulsions dont le nombre est proportionnel au débit donne une valeur supplémentaire du débit qui pourra être corrélée soit à la valeur de la pression intermédiaire Pi soit à la valeur du déplacement S. Ce boîtier et le fait que le régulateur comprend une face de pose groupant toutes les prises de pression, de température et du déplacement axial du dispositif obturateur à double clapet présente un autre avantage spécifique de l'invention. La configuration du boîtier telle que décrite grâce aux clapets anti-retour dans l'interface de pose permet de mettre en place ou enlever le boîtier pendant le fonctionnement sans coupure de gaz.

Bien entendu, de multiples modifications peuvent être apportées aux régulateurs tels que décrits ci-avant et représentés aux figures, à titre d'exemple. Ainsi, le générateur d'énergie peut être du type à cellules piézoélectriques et le boîtier électronique pourrait être équipé d'un émetteur, récepteur radio ou GSM, l'autonomie étant donnée par le dispositif générateur d'énergie.

## Revendications

1. Appareil régulateur et débitmètre de gaz à détente et à clapet d'obturation de la voie d'écoulement du gaz, du type comprenant un dispositif clapet (6) et un dispositif siège, mobiles l'un par rapport à l'autre entre une position d'obturation de la voie d'écoulement de gaz entre un orifice d'entrée et un orifice de sortie, et une position d'ouverture de cette voie, sous l'effet de moyens de membrane soumis à l'action antagoniste d'une force et de la pression de sortie du gaz, le dispositif clapet comprend au moins un clapet (12) comprenant une partie cylindrique (13) et un élément obturateur (14) du siège de clapet (9), placé à une extrémité de la partie cylindrique (13), axialement déplaçable dans un orifice cylindrique d'un gicleur (19) dont une extrémité constitue ledit siège (9), en formant un espace annulaire (20) entre cette partie cylindrique et le gicleur, entre la position de fermeture de la voie d'écoulement de gaz par application de l'élément obturateur (14) sur le siège (9) et la position d'ouverture de cette voie dans laquelle la partie cylindrique (13) est sortie de l'orifice de gicleur (19), le clapet fonctionnant dans un premier domaine des faibles débits (a) tant que la partie cylindrique (13) forme avec le gicleur l'espace annulaire (20) et, lorsque la partie cylindrique est sortie de l'orifice de gicleur (19), dans un deuxième domaine (b) de débit connexe au premier domaine de faibles débits et dans lequel les débits sont plus grands que ceux du domaine des faibles débits, l'espace annulaire (20) constituant un moyen de perte de charge introduite dans la voie d'écoulement du gaz dans le domaine (a) de faibles débits assurant que l'échelle du rapport du déplacement du clapet par rapport au débit de gaz est sensiblement constante dans le domaine des faibles débits et plus grande que l'échelle également sensiblement constante de ce rapport, dans le domaine des débits plus grands, l'échelle plus grande dans le domaine (a) de faibles débits constituant un moyen de mesure précis de l'écoulement du gaz même dans ce domaine des faibles débits.

2. Appareil régulateur selon la revendication 1, **caractérisé en ce que** la partie cylindrique (13) se termine par une partie tronconique (15).

3. Appareil régulateur et selon l'une des revendications 1 ou 2, **caractérisé en ce que** le dispositif clapet (6) comporte deux clapets précités (12, 12') montés en tandem chacun dans un gicleur précité (19, 19') et le dispositif à deux clapets (12, 12') délimite dans la voie d'écoulement un espace intermédiaire (52) entre les deux clapets (12, 12') dans lequel la pression intermédiaire (Pi) varie fortement par rapport aux pressions amont (Pam) et aval (Pav) lors du déplacement (S) du clapet de façon à pouvoir être utilisée comme paramètre représentatif du déplacement du clapet.

4. Appareil régulateur selon la revendication 3, **caractérisé en ce que** la pression intermédiaire précitée (Pᵢ) est utilisée pour entraîner en rotation l'organe mobile d'un dispositif générateur de courant d'alimentation d'un dispositif électronique associé au régulateur.

5. Appareil régulateur selon la revendication 4, **caractérisé en ce que** le dispositif générateur de courant comprend une turbine (26) montée dans la voie d'écoulement de gaz, en amont du dispositif clapet (6) et adaptée pour produire des impulsions de gaz utilisables pour l'entraînement de l'organe générateur précité.

6. Appareil régulateur selon la revendication 5, **caractérisé en ce que** le nombre des impulsions de gaz précitées est proportionnel au débit (DB) et **en ce que** le comptage des impulsions donne une valeur du débit qui peut être corrélée soit à la valeur de la pression intermédiaire (Pi) soit à la valeur du déplacement (S).

7. Appareil régulateur selon l'une des revendications 5 ou 6, **caractérisé en ce que** le dispositif double clapet constitue un moyen d'auto-étalonnage de surveillance des dérives des valeurs de mesure du débit par comparaison des valeurs de la pression intermédiaire (Pᵢ), de la valeur du déplacement (S) et du nombre des impulsions.

8. Appareil régulateur selon l'une des revendications 3 à 7, **caractérisé en ce qu'**il comporte un plan de pose contenant toutes les prises de pression, de température (44, 55, 66) et de mouvement (63) utiles pour la mesure du débit de gaz et l'entraînement de l'organe de générateur de courant et sur lequel peut être monté un boîtier électronique (48) ayant un plan de pose complémentaire.

9. Appareil régulateur selon la revendication 8, **caractérisé en ce que** le boîtier électronique (48) comporte un compartiment de batterie rechargeable (75), un potentiomètre (77) d'indicateur du déplacement (S) du dispositif clapet (6), un dispositif d'engrenage (79) de transmission de mouvement, associé au potentiomètre et un dispositif générateur de courant (81).

## Claims

1. A gas regulating and flow metering apparatus with pressure reduction and a valve closing the gas flow path, of the type comprising a valve device (6) and a seat device, mobile in relation to one another between a closing position of gas flow path between an inlet orifice and an outlet orifice, and an opening position of this path, under the effect of membrane means exposed to the antagonistic effect of a force and the output pressure of the gas, the valve device comprising at least one valve (12) comprising a cylindrical part (13) and a closing element (14) of the valve seat (9), placed at one end of the cylindrical part (13), axially movable inside a cylindrical orifice of a nozzle (19) one end of which forms said seat (9), by forming an annular space (20) between this cylindrical part and the nozzle, between the closing position of the gas flow path by applying the closing element (14) to the seat (9), and the opening position of this path in which the cylindrical part (13) is extracted from the orifice of the nozzle (19), the valve operating in a first range of low flow rates (a) as long as the cylindrical part (13) together with the nozzle is forming the annular space (20), and when the cylindrical part is extracted from the nozzle orifice (19), operating in a second flow rate range (b) related to the first range of low flow rates, and where flow rates are greater than those of the low flow rate range, the annular space (20) being a pressure loss means inserted into the gas flow path in the range (a) of low flow rates ensuring that the scale of the ratio of the valve displacement in relation to the gas flow rate is substantially constant in the range of the low flow rates and greater than the scale of this ratio, which is also substantially constant, in the range of the greater flow rates, the greater scale in the range (a) of lower flow rates being a means for precisely measuring the gas flow even in this range of lower flow rates.

2. The regulating apparatus according to claim 1, **characterized in that** the cylindrical part (13) is terminated by a truncated part (15).

3. The regulating apparatus according to any of claims 1 or 2, **characterized in that** the valve device (6) includes two valves (12, 12') mentioned above arranged in tandem respectively in one nozzle (19, 19') mentioned above, and the device with two valves (12, 12') delimits in the flow path an intermediate space (52) between the two valves (12, 12') where the intermediate pressure (Pi) largely varies in relation to the upstream (Pam) and downstream (Pav) pressures upon displacement (S) of the valve so that it can be used as a parameter representing valve displacement.

4. The regulating apparatus according to claim 3, **characterized in that** the above-mentioned intermediate pressure (Pᵢ) is used for rotating the mobile member of a device generating current supplying an electronic device associated with the regulating apparatus.

5. The regulating apparatus according to claim 4, **characterized in that** the current generating device comprises a turbine (26) mounted in the gas flow path, upstream of the valve device (6) and adapted for producing gas pulses usable for driving the above-mentioned generating member.

6. The regulating apparatus according to claim 5, **characterized in that** the number of gas pulses mentioned above is proportional to the flow rate (DB), and that the count of the pulses produces a value of the flow rate which can be correlated either with the intermediate pressure value (Pᵢ) or with the value of the displacement (S).

7. The regulating apparatus according to any of claims 5 or 6, **characterized in that** the double valve device is a self-calibrating means for monitoring drifts of the measuring values of the flow rate by comparing the values of intermediate pressure (Pᵢ), the value of the displacement (S), and the number of pulses.

8. The regulating apparatus according to any of claims 3 to 7, **characterized in that** it includes an interface containing all of the pressure, temperature (44, 55, 66), and movement (63) taps useful for measuring the gas flow rate and driving the current generating member, and whereon an electronic case (48) can be mounted having a matching interface.

9. The regulating apparatus according to claim 8, **characterized in that** the electronic case (48) has a rechargeable battery compartment (75), a potentiometer (77) indicating the displacement (S) of the valve device (6), a gear device (79) for transmitting movement, associated with the potentiometer, and a current generating device (81).

## Patentansprüche

1. Gasregelungs- und Durchflussmessgerät mit Druckminderung und Ventil zum Verschließen des Durchflussweges des Gases, von der Art umfassend eine Ventilvorrichtung (6) und eine Sitzvorrichtung, die im Verhältnis zueinander zwischen einer Position zum Verschließen des Gasdurchflussweges zwischen einer Eingangsöffnung und einer Ausgangsöffnung und einer Position zum Öffnen dieses Weges unter der Einwirkung von Membranmitteln, die der antagonistischen Wirkung einer Kraft und des Ausgangsdrucks des Gases ausgesetzt sind, beweglich sind, wobei die Ventilvorrichtung mindestens ein Ventil (12), das einen zylindrischen Teil (13) umfasst, und ein Verschlusselement (14) des Ventilsitzes (9) umfasst, das an einem Ende des zylindrischen Teils (13) angeordnet ist, in einer zylindrischen Öffnung einer Einspritzdüse (19), deren eines Ende den Sitz (9) bildet, indem ein ringförmiger Raum (20) zwischen diesem zylindrischen Teil und der Einspritzdüse gebildet wird, zwischen der Verschlussposition des Gasdurchflussweges durch Anlegen des Verschlusselements (14) an den Sitz (9) und der Öffnungsposition dieses Wegs, in welcher der zylindrische Teil (13) aus der Öffnung der Einspritzdüse (19) herauskommt, axial bewegbar ist, wobei das Ventil in einem ersten Bereich geringer Durchsätze (a) funktioniert, so lange der zylindrische Teil (13) mit der Einspritzdüse den ringförmigen Raum (20) bildet, und wenn der zylindrische Teil aus der Einspritzdüsenöffnung (19) herauskommt, in einem zweiten Durchsatzbereich (b) funktioniert, der mit dem ersten Bereich geringer Durchsätze zusammenhängt und in dem die Durchsätze höher sind als die des Bereichs mit den geringen Durchsätzen, wobei der ringförmige Raum (20) ein Druckverlustmittel bildet, das in den Gasdurchflussweg in dem Bereich (a) geringer Durchsätze eingefügt wird und sicherstellt, dass der Maßstab des Verhältnisses der Ventilverschiebung im Verhältnis zum Gasdurchsatz im Bereich der geringen Durchsätze im Wesentlichen konstant ist und in dem Bereich der größeren Durchsätze größer als der Maßstab dieses Verhältnisses ist, das ebenfalls im Wesentlichen konstant ist, wobei der größere Maßstab in dem Bereich (a) geringerer Durchsätze ein Mittel bildet, um den Gasfluss auch in diesem Bereich geringer Durchsätze genau zu messen.

2. Regelungsgerät nach Anspruch 1, **dadurch gekennzeichnet, dass** der zylindrische Teil (13) in einem kegelstumpfförmigen Teil (15) endet.

3. Regelungsgerät nach einem der Ansprüche 1 oder 2, **dadurch gekennzeichnet, dass** die Ventilvorrichtung (6) zwei zuvor erwähnte Ventile (12, 12') umfasst, die jeweils in einer oben erwähnten Einspritzdüse (19, 19') als Tandem angeordnet sind, und die Vorrichtung mit den beiden Ventilen (12, 12') auf dem Durchflussweg einen Zwischenraum (52) zwischen den beiden Ventilen (12, 12') begrenzt, in dem der Zwischendruck (Pi) im Verhältnis zu den eingangsseitigen (Pam) und ausgangsseitigen (Pav) Drücken bei der Verschiebung (S) des Ventils stark variiert, so dass er als Parameter verwendet werden kann, der die Verschiebung des Ventils darstellt.

4. Regelungsgerät nach Anspruch 3, **dadurch gekennzeichnet, dass** der oben erwähnte Zwischendruck (Pᵢ) verwendet wird, um das bewegliche Organ einer Strom erzeugenden Vorrichtung, die eine elektronische Vorrichtung versorgt, die mit dem Regelungsgerät verknüpft ist, in Drehung zu versetzen.

5. Regelungsgerät nach Anspruch 4, **dadurch gekennzeichnet, dass** die Strom erzeugende Vorrichtung eine Turbine (26) umfasst, die auf dem Gasdurchflussweg stromaufwärts von der Ventilvorrichtung (6) montiert ist und dazu geeignet ist, um Gasimpulse zu erzeugen, die zum Antreiben des oben erwähnten Generierungsorgans verwendbar sind.

6. Regelungsgerät nach Anspruch 5, **dadurch gekennzeichnet, dass** die Anzahl der oben erwähnten Gasimpulse zum Durchsatz (DB) proportional ist, und dass die Zählung der Impulse einen Wert des Durchsatzes ergibt, der entweder mit dem Zwischendruckwert (Pᵢ) oder mit dem Wert der Verschiebung (S) korreliert werden kann.

7. Regelungsgerät nach einem der Ansprüche 5 oder 6, **dadurch gekennzeichnet, dass** die doppelte Ventilvorrichtung ein selbstkalibrierendes Mittel bildet, um Abweichungen der Messwerte des Durchsatzes durch einen Vergleich der Werte des Zwischendrucks (Pᵢ), des Wertes der Verschiebung (S) und der Anzahl der Impulse zu überwachen.

8. Regelungsgerät nach einem der Ansprüche 3 bis 7, **dadurch gekennzeichnet, dass** er eine Passfläche umfasst, die alle Abnahmestellen für Druck, Temperatur (44, 55, 66) und Bewegung (63) enthält, die zur Messung des Gasdurchsatzes und zum Antrieb des Strom erzeugenden Organs nützlich sind, und auf der ein Elektronikgehäuse (48) montiert sein kann, das eine ergänzende Passfläche aufweist.

9. Regelungsgerät nach Anspruch 8, **dadurch gekennzeichnet, dass** das Elektronikgehäuse (48) ein Fach (75) für eine aufladbare Batterie, einen Potentiometer (77), der die Verschiebung (S) der Ventilvorrichtung (6) angibt, eine Getriebevorrichtung (79) zum Übertragen der Bewegung, die mit dem Potentiometer verknüpft ist, und eine Strom erzeugende Vorrichtung (81) umfasst.
